# EUROPEAN PATENT SPECIFICATION

(11) **EP 0 362 921 B1**
(45) Date of publication and mention of the grant of the patent: **30.11.1994**
(21) Application number: 89202321.9
(22) Date of filing: 15.09.1989
(51) Int. Cl.: B60C 23/00, F16C 33/76, F16C 19/00

(54) **Rotary joint defined in a rolling bearing for establishing communication between two fluid containers having different pressures and rotating relative to one another**
Ein an einen Wälzlager angeordneter Dichtungsring zur Verbindung von zwei Fluidbehältern mit unterschiedlichem Druck, wobei wenigstens einer bezüglich des anderen drehbar ist
Joint rotatif défini dans un palier à roulements assurant la connexion entre deux réservoirs de fluides de pressions différentes, dont au moins un est rotatif par rapport à l'autre

(30) Priority: 03.10.1988 IT 6788688
(43) Date of publication of application: 11.04.1990
(73) Proprietor: SKF INDUSTRIE S.P.A., I-10123 Torino (IT)
(72) Inventor: Vignotto, Angelo, I-10100 Torino (IT); Colanzi, Franco, I-10100 Torino (IT)
(74) Representative: Lotti, Giorgio

(56) References cited:
- EP-A- 0 193 452
- EP-A- 0 224 674
- DE-A- 3 206 488
- DE-A- 3 535 855

## Description

Subject of the invention is a joint for a rolling bearing able to establish communication between two fluid containers having different pressures and where at least one of them is rotary with respect to the other one.

A bearing with said joint may be applied in particular, but not exclusively, in the automotive field when constant attention is given to the pressure of tires directly from the driver's compartment. In case an anomalous value in a tire air pressure is observed, such device operates so that one or more compressors are actuated to restore the pressure of said tire to optimum condition.

It is necessary that the compressor connected to each wheel or assembled on each motorcar axle is constantly in direct air communication with the wheels on which is operates in order to detect the state of air pressure in the tires and intervene on same in case of anomaly during motorcar ride. For this type of application there must evidently be a connection between a stationary part and a rotary part; the interposition of a bearing equipped with an air passage is therefore necessary and said bearing is to be inserted between the above parts, one rotating with respect to the other.

Such an application is known from the EP-A-0224674, but the joint components are annular and mounted on the two race rings of a wheel hub so that mounting operations are more difficult and seal problems may occur.

The invention proposes a joint for a bearing having the above mentioned features and having means to ensure perfect seal in the communication passages of the compressed air among its rotary parts.

For the above purposes and others which will be better appreciated as the description follows, the invention proposes to realize a joint for establishing communication between two fluid containers, one of which being rotative relative to the other one, characterized in that:
- said joint is defined inside a rolling bearing, said rolling bearing consistin of two rows of balls axially spaced with respect to one another, each carried by one common outer race ring and one of two coaxial inner race rings placed end to end;
- an annular chamber is defined by the inner surface of said outer race ring, the outer surface of said coaxial inner race rings and by a pair of coaxial substantially annular inner seals rigidly connected to one of said surfaces, forming leap seals against the other of said surfaces and axially spaced with respect to one another between said two rows of balls;
- said outer race ring is equipped with at least one radial through hole communicating with one of said fluid containers, said two coaxial inner race rings define at least one radial through hole communicating with the other one of said fluid containers, said radial through holes communicating with said annular chamber.

For the other purposes the joint further comprises:
- an annular rigid body of U-shaped axial section, the base of which is rigidly connected to the inner surface of the outer race ring and has at least one radial through hole communicating with said at least one radial through hole in said outer race ring, said annular rigid body defining two annular radially projecting external side walls axially spaced with respect to one another between said two rows of balls;
- a first spacer ring coaxial and concentric with said annular rigid body, having a base supported by said base of the annular rigid body, equipped with at least one radial through hole communicating with said at least one radial through hole of said annular rigid body and with said chamber, said first spacer ring defining two annular radially projecting internal side walls axially spaced with respect to one another between said external side walls of the annular rigid body;
   wherein each of said two inner seals is applied on one of said two internal side walls, is rigidly connected to the base of said annular rigid body and forms a lip seal against the outer surface of said inner race rings;
   the joint further comprising an outer seal between each of said two inner seals and the respective of said two external side walls, connected to the base of said annular rigid body and forming a lip seal against the outer surface of said inner race rings; each of said outer seals being separated from the respective inner seal by a second spacer ring, and from the respective outer wall of said annular rigid body by a third spacer ring.

With reference to the attached drawings, showing a section of the bearing in correspondance with the compressed air passage obtained into it, the joint for rolling bearing of the invention is now described.

Said bearing consists of a common outer race ring 10 and one of two coaxial inner race rings 11, between which two rows of balls 12 are interposed. One race will be rotary and one stationary, either the two inner or the outer one, depending on the type of assembly to be executed; the race rings 10 and 11 carry respective through holes 13 and 14 through said race rings. In correspondence of hole 13, the outer race 10 carries a body 15 in its interior which forms a seal against race ring 10 by means of O-Ring 16, or other equivalent system such as painting the outer diameter of the covering body 15.

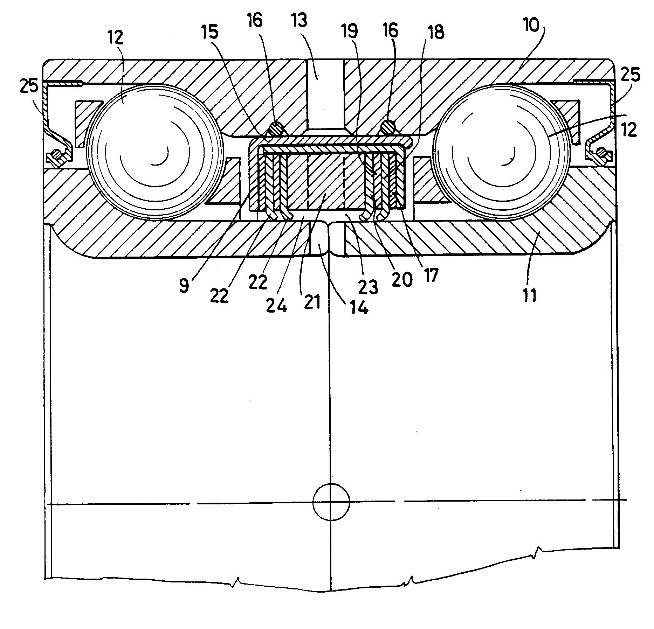

Said body 15 may consist of a metal element or two metal elements coupled to each other along the main face, as illustrated in the drawing, with the ends bent down to form side edges 9, several elements are found in the interior of the covering body, are specular to each other and they consist of: a spacer ring 17, a first seal ring 18, a second spacer ring 19, a second seal ring 20 and a sole spacer ring 21 (spacers made of metal, plastic or other suitable materials). Rings 18 and 20 will respectively be equipped with seal lips 22 which act against the outer surface of the inner race rings 11 of the bearing.

The spacer ring 21 will be equipped with a through hole 23 equally obtained in the covering body 15 to establish direct communication between holes 13 and 23; the communication between hole 13 of the outer race 10 and hole 14 of the inner race rings 11 is thus also realized, as chamber 24 of the bearing communicates directly both with hole 23 of ring 21 and with hole 14 of the race rings 11 of the bearing.

If the bearing of the invention should be applied to a device for the detection and adjustment of the tyre pressure of a motorcar of the above mentioned type, one of the rings 10 or 11 of the bearing will have to be rigidly connected to the wheel or to a support whilst the other rings will have to be connected to a small compressor or compressed fluid tank which will have to be assembled on the other bearing race rings either directly or by means of intermediate elements, for instance the axle of the motorcar. Hole 13 and hole 14 of the races rings 10 and 11 will in turn be directly connected, by means of suitable ducts, respectively to the interior of the tyre and to the compressor or compressed fluid tank. The ducts will be equipped with valves and sensors connected to pushbuttons or switches arranged on the motorcar dashboard: the pressure of the tyre involved in thus immediately displayed and in case of anomaly the compressor combined to the tyre may be operated to restore said pressure to the best conditions. When operating the compressor and opening the above mentioned valves, the compressed air goes through the bearing along holes 13 and 14 of race rings 10 and 11, passing in chamber 24 and through hole 23 of the ring 21 of the covering body 15. Chamber 24 will have annular extension and thanks to this the continuity between holes 13 and 14 will always be ensured by same chamber 24, no matter what the position of the holes is.

As illustrated in the drawing, the lips 22 of the rings 18 and 20 are bent down towards chamber 24 to form double and perfect sealing against accidental outlets of compressed air from chamber 24 towards the balls 12 of the bearing. It will be advantageous, in any case, that the side seals 25 of the bearing are in inverted position with respect to the traditional one, as shown in figure, so that in case of accidental outlets of compressed air through seal 22, the air will not remain in the adjacent chamber of the bearing, that is the one comprising the balls 12, but will be able to come out sidewose through seals 25 to avoid that high pressure air accumulated in this chamber may irremediably damage seals 25.

The bearing of the invention has a very wide range of application in the various fields where it is necessary to establish communication between two fluid containers having different pressure, and which are assembled in rotating mode at different speed or where one of them rotates while the other one remains stationary. It is therefore evident that the particular application of the bearing on a device for the adjustment of the pressure of motorcar tyres is described herein as an example.

## Claims

1. Joint for establishing communication between two fluid containers, one of which being rotative relative to the other one, characterized in that:
- said joint is defined inside a rolling bearing, said rolling bearing consisting of two rows of balls (12) axially spaced with respect to one another, each carried by one common outer race ring (10) and one of two coaxial inner race rings (11) placed end to end;
- an annular chamber (24) is defined by the inner surface of said outer race ring, the outer surface of said coaxial inner race rings and by a pair of coaxial substantially annular inner seals (20) rigidly connected to one of said surfaces, forming leap seals (22) against the other of said surfaces and axially spaced with respect to one another between said two rows of balls;
- said outer race ring is equipped with at least one radial through hole (13) communicating with one of said fluid containers, said two coaxial inner race rings define at least one radial through hole (14) communicating with the other one of said fluid containers, said radial through holes communicating with said annular chamber.

2. Joint according to claim 1, further comprising:
- an annular rigid body (15) of U-shaped axial section, the base of which is rigidly connected to the inner surface of the outer race ring (10) and has at least one radial through hole communicating with said at least one radial through hole (13) in said outer race ring (10), said annular rigid body defining two annular radially projecting external side walls (9) axially spaced with respect to one another between said two rows of balls;
- a first spacer ring (21) coaxial and concentric with said annular rigid body (15), having a base supported by said base of the annular rigid body, equipped with at least one radial through hole (23) communicating with said at least one radial through hole of said annular rigid body and with said chamber (24), said first spacer ring defining two annular radially projecting internal side walls axially spaced with respect to one another between said external side walls of the annular rigid body;
wherein each of said two inner seals (20) is applied on one of said two internal side walls, is rigidly connected to the base of said annular rigid body (15) and forms a lip seal against the outer surface of said inner race rings (11);
the joint further comprising an outer seal (18) between each of said two inner seals (20) and the respective of said two external side walls (9), connected to the base of said annular rigid body (15) and forming a lip seal against the outer surface of said inner race rings (11); each of said outer seals (18) being separated from the respective inner seal by a second spacer ring (19), and from the respective outer wall (9) of said annular rigid body by a third spacer ring (17).

## Patentansprüche

1. Dichtungsring zur Verbindung von zwei Fluidbehältern, wobei einer von beiden bezüglich des anderen drehbar ist, dadurch gekennzeichnet, daß
- der Dichtungsring innerhalb eines Wälzlagers angeordnet ist, wobei das Wälzlager aus zwei Kugelreihen (12) besteht, die axial in Bezug zueinander beabstandet sind, wobei jede von einem gemeinsamen äußeren Lagerring (10) und einem von zwei koaxialen inneren Lagerringen (11), die der Länge nach angeordnet sind, getragen werden;
- eine ringförmige Kammer (24) durch die innere Fläche des äußeren Lagerringes, durch die äußere Fläche des koaxialen inneren Lagerringes und durch ein Paar koaxialer, im wesentlichen ringförmiger innerer Dichtungen (20) definiert wird, die starr mit einer der Flächen verbunden sind, wobei sie Dichtungslippen (22) gegen die anderen der besagten Flächen bilden und axial in Bezug zueinander zwischen den zwei Kugelreihen beabstandet sind;
- der äußere Ring mit mindestens einem radialen Durchgangsloch (13) versehen ist, das mit einem der Fluidbehälter verbunden ist, wobei die zwei koaxialen inneren Lagerringe mindestens ein radiales Durchgangsloch (14) definieren, das mit dem jeweils anderen der Fluidbehälter verbunden ist, und wobei die radialen Durchgangslöcher mit der ringförmigen Kammer verbunden sind.

2. Dichtungsring nach Anspruch 1, weiterhin umfassend
- einen ringförmigen starren Körper (15) mit einem U-förmigen axialen Querschnitt, dessen Basis starr an der inneren Fläche des äußeren Lageringes (10) verbunden ist und der mindestens ein radiales Durchgangsloch aufweist, das mit mindestens einem radialen Durchgangsloch (13) in dem äußeren Lagerring (10) verbunden ist, wobei der ringförmige starre Körper zwei ringförmige, radial vorstehende äußere Seitenwände (9) definiert, die axial in Bezug zueinander zwischen den zwei Kugelreihen beabstandet sind;
- einen ersten Abstandsring (21), der koaxial und konzentrisch mit dem ringförmigen starren Körper (15) ist, der eine Basis aufweist, die durch die Basis des ringförmigen starren Körpers unterstützt wird, der mit mindestens einem radialen Durchgangsloch (23) versehen ist, das mit mindestens einem radialen Durchgangsloch des ringförmigen starren Körpers und der Kammer (24) verbunden ist, wobei der erste Abstandsring zwei ringförmige, radial vorstehende innere Seitenwände definiert, die axial in Bezug zueinander zwischen den äußeren Seitenwänden des ringförmigen starren Körpers beabstandet sind;
bei dem jeder der zwei inneren Dichtungen (20) auf einer der zwei inneren Seitenwände aufgedrückt wird, starr an der Basis des ringförmigen starren Körpers (15) verbunden ist und eine Dichtungslippe gegen die äußere Fläche des inneren Lagerringes (11) bildet;
wobei der Dichtungsring weiterhin eine äußere Dichtung (18) zwischen jeder der zwei inneren Dichtungen (20) und einer entsprechenden der zwei äußeren Seitenwände (9) umfaßt, die mit der Basis des ringförmigen starren Körpers (15) verbunden ist und eine Dichtungslippe gegen die äußere Fläche des inneren Lagerringes (11) bildet;
wobei jede der äußeren Dichtungen (18) durch einen zweiten Abstandsring (19) von der entsprechenden inneren Dichtung getrennt ist und durch einen dritten Abstandsring (17) von der entsprechenden äußeren Wand (9) des ringförmigen starren Körpers getrennt ist.

## Revendications

1. Joint d'établissement de communication entre deux réservoirs de fluides, dont l'un est rotatif par rapport à l'autre, caractérisé en ce que:
- ledit joint est défini à l'intérieur d'un palier à roulements, ledit palier à roulements consistant en deux rangées de billes (12) espacées axialement l'une par rapport à l'autre, et portées chacune par une bague extérieure commune (10) ainsi que par l'une de deux bagues intérieures coaxiales (11) disposées bout à bout;
- une chambre annulaire (24) est définie par la surface intérieure de ladite bague extérieure, par la surface extérieure desdites bagues intérieures coaxiales et par une paire de joints étanches intérieurs coaxiaux sensiblement annulaires (20) reliés de façon rigide à l'une desdites surfaces, en formant des joints à lèvre (22) portant contre l'autre desdites surfaces, et espacés axialement l'un par rapport à l'autre entre lesdites deux rangées de billes;
- ladite bague extérieure comporte au moins un trou radial traversant (13) communiquant avec l'un desdits réservoirs de fluide, et lesdites deux bagues intérieures coaxiales définissent au moins un trou radial traversant (14) communiquant avec l'autre desdits réservoirs de fluide, lesdits trous traversants radiaux communiquant avec ladite chambre annulaire.

2. Joint selon la revendication 1, comprenant en outre:
- un corps annulaire rigide (15) à section transversale axiale configurée en U, dont la base est reliée de façon rigide à la surface intérieure de la bague extérieure (10) et comporte au moins un trou radial traversant communiquant avec ledit trou traversant radial au moins unique (13) de ladite bague extérieure (10), ledit corps annulaire rigide définissant deux parois latérales extérieures annulaires radialement en saillie (9) espacées axialement l'une par rapport à l'autre entre lesdites deux rangées de billes;
- une première bague d'entretoise (21) coaxiale et concentrique audit corps annulaire rigide (15), comportant une base supportée par ladite base du corps annulaire rigide, comportant au moins un trou radial traversant (23) communiquant avec ledit premier trou au moins unique ménagé dans ledit corps annulaire rigide et avec ladite chambre (24), ladite première bague d'entretoise définissant deux parois latérales intérieures annulaires, radialement en saillie et espacées axialement l'une par rapport à l'autre entre lesdites parois latérales extérieures dudit corps annulaire rigide;
dans lequel chacun desdits deux joints étanches intérieurs (20) est appliqué sur l'une desdites deux parois latérales intérieures, est relié de façon rigide à la base dudit corps annulaire rigide (15), et forme un joint à lèvre portant contre la surface extérieure desdites bagues intérieures (11);
le joint comprenant en outre un joint étanche extérieur (18) entre chacune desdits deux joints étanches intérieurs (20) et la paroi respective parmi lesdites deux parois latérales extérieures (9), relié à la base dudit corps annulaire rigide (15) et formant un joint à lèvre portant contre la surface extérieure desdites bagues intérieures (11), chacun desdits joints étanches extérieurs (18) étant séparé du joint intérieur respectif par une deuxième bague d'entretoise (19), et de la paroi extérieure respective dudit corps annulaire rigide par une troisième bague d'entretoise (17).
